# EUROPÄISCHE PATENTANMELDUNG

(11) **EP 4 700 058 A1**
(43) Veröffentlichungstag der Anmeldung: **25.02.2026**
(21) Anmeldenummer: 24195639.0
(22) Anmeldetag: 21.08.2024
(51) Int. Cl.: C08G 18/32, C08G 18/79, C09D 175/02

(54) **POLYHARNSTOFF-BESCHICHTUNG MIT DIMERFETTSÄURE-BASIERTEM AMIN**

(71) Anmelder: Sika Technology AG, 6340 Baar (CH)
(72) Erfinder: BRUCHERTSEIFER, Christian, 70439 Stuttgart (DE); WALTHER, Burkhard, 83308 Trostberg (DE)
(74) Vertreter: Sika Patent Attorneys

(57) **Zusammenfassung**

Gegenstand der Erfindung ist die Verwendung eines Härters für die Aushärtung von mindestens einem Polyisocyanat, wobei der Härter mindestens ein Dimerfettsäure basiertes Amin **A1** und gegebenenfalls mindestens ein weiteres Amin **A2** umfasst und freie Amingruppen und blockierte Amingruppen im Molverhältnis 40/60 bis 90/10 enthält.

Die Verwendung ermöglicht Polyharnstoff-Beschichtungen, welche mittels Zweikomponenten-Spritzapplikation gut verarbeitbar sind und sehr schnell aushärten. Die daraus erhaltenen Polyharnstoff-Beschichtungen verfügen über ausgezeichnete mechanische Eigenschaften und eine sehr hohe Stabilität gegenüber Temperatur, UV-Strahlung, Nässe und Chemikalien. Sie sind besonders geeignet als Schutzbeschichtung für besonders belastete Objekte wie beispielsweise in Schwimmbecken.

## Beschreibung

### Technisches Gebiet

Die Erfindung betrifft Aminhärter für Polyharnstoff-Beschichtungen.

### Stand der Technik

Polyharnstoff-Beschichtungen sind bekannt. Sie zeichnen sich durch eine hohe Festigkeit und Flexibilität, gute Haftungseigenschaften und eine hohe Temperaturbeständigkeit und Witterungsstabilität aus. Aufgrund der sehr hohen Reaktivität der Amin-Isocyanat-Reaktion erfolgt ihre Applikation typischerweise mittels einem Zweikomponenten-Spritzverfahren, wobei die separat verpackte Amin- und Isocyanat-Komponente in einer geeigneten Spritzapparatur dosiert und vermischt werden und die vermischte Beschichtung in der gewünschten Schichtdicke auf ein Substrat aufgesprüht wird.

Die sehr hohe Reaktivität der Amin-Isocyanat-Reaktion und eine genügend niedrigviskose Konsistenz der Komponenten und der vermischten Beschichtung möglichst ohne Einsatz von VOC-Lösemitteln stellen dabei eine grosse Herausforderung dar. Die Verfügbarkeit von geeigneten Aminen mit nicht zu hoher Reaktivität und Viskosität ist sehr beschränkt. Einerseits geeignet sind aromatische Amine wie insbesondere Diethyltoluoldiamin (DETDA) oder Aminobenzoate von Poly(1 ,4-butandiol), erhältlich unter dem Handelsnamen Versalink^{®} von Evonik, und andererseits Polyetheramine wie insbesondere die unter dem Handelsnamen Jeffamine^{®} von Huntsman erhältlichen Polyoxypropylendiamine oder-triamine. Kleine aromatische Amine wie DETDA sind jedoch chronisch gesundheitsgefährdend sowie umweltgefährdend und entsprechend unvorteilhaft gekennzeichnet. Die Aminobenzoate von Poly(1 ,4-butandiol) sind teuer und hochviskos oder fest. Sie müssen mit erheblichen Mengen an Verdünnern gelöst und/oder verdünnt werden, um in einer Spritzbeschichtung verwendbar zu sein, wobei die Verdünner entweder VOC-Emissionen verursachen oder in der ausgehärteten Beschichtung verbleiben, wo sie deren Beständigkeit schwächen und daraus migrieren können, was eine schmierige Oberfläche, Flecken und Schwund verursachen kann. Und Polyetheramine bringen eine unerwünschte Hydrophilie ins ausgehärtete Polyharnstoffpolymer, wenn sie in hoher Menge eingesetzt werden. Eine weitere Möglichkeit ist der Einsatz von Aminhärtern mit sterisch gehinderten, sekundären, aliphatisch gebundenen Amingruppen, insbesondere Polyaspartatester, wie sie unter dem Markennamen Desmophen^{®} NH von Covestro erhältlich sind. Die dabei gebildeten Ester-substituierten Harnstoff-Bindungen sind jedoch in Bezug auf Temperaturstabilität und, im Fall einer Verseifung der Estergruppen, erhöhter Hydrophilie unvorteilhaft. Eine weitere Möglichkeit ist das Mitverwenden von Polyolen in der Amin-Komponente. Dies ist für hochqualitative Polyharnstoff-Beschichtungen aber nur sehr eingeschränkt möglich, da sonst die vorteilhaften Eigenschaften in Bezug auf Applizierbarkeit in der Kälte und bei sehr feuchten bis nassen Bedingungen, rasche Begehbarkeit nach der Applikation und hohe Beständigkeit der ausgehärteten Beschichtung nicht mehr ausreichend gegeben sind.

US 2008/0229976 beschreibt eine Polyharnstoff-Beschichtung, bei welcher die Amin-Komponente vor allem DETDA und Polyetheramine enthält. Dabei bestehen die genannten Nachteile in Bezug auf Toxizität und erhöhte Hydrophilie.

WO 2021/123107 beschreibt eine Polyharnstoff-Beschichtung mit Versalink^{®} P-1000, einem vergleichsweise hochviskosen Bisaminobenzoat von Poly(1 ,4-butandiol), und als Verdünner erhebliche Mengen an Phosphat-Weichmacher bzw. einem aromatischen Kohlenwasserstoffharz in der Amin-Komponente. Dabei bestehen die genannten Nachteile in Bezug auf Kosten und Gefahr der Migration der nicht ins Polymernetzwerk eingebauten Verdünner.

US 2013/0004777 beschreibt eine Polyharnstoff-Beschichtung mit einem Polyaspartat, einem blockierten Amin und einem VOC-Lösemittel in der Amin-Komponente. Dabei bestehen die genannten Nachteile in Bezug auf Beständigkeit gegenüber Temperatur und Hydrolyse.

Es besteht deshalb ein Bedarf nach weiteren Aminhärtern mit einer geeigneten Reaktivität und Konsistenz für die Verwendung in Polyharnstoff-Beschichtungen. Insbesondere soll die Reaktivität der Amin-Komponente nicht zu hoch sein, so dass die Applikation in einem Spritzverfahren ohne Anhärtungen in der Spritzdüse und ohne Rüsselbildung (Aufbau einer ausgehärteten Schicht auf der Unterseite der Spritzdüse) möglich ist und die applizierten Flächen nach kurzer Zeit begehbar sind.

### Darstellung der Erfindung

Aufgabe der vorliegenden Erfindung ist es, einen Härter für Polyharnstoff-Beschichtungen zur Verfügung zu stellen, welcher in einer Zweikomponenten-Spritzapplikation gut verarbeitbar ist, eine schnelle Begehbarkeit ermöglicht und qualitativ hochstehende Beschichtungen mit hoher Beständigkeit ermöglicht.

Diese Aufgabe wird überraschenderweise mit der Verwendung eines Härters mit mindestens einem Dimerfettsäure basierten Amin **A1** und gegebenenfalls mindestens einem weiteren Amin **A2** für die Aushärtung von mindestens einem Polyisocyanat gelöst, wobei der Härter freie Amingruppen und blockierte Amingruppen im Molverhältnis 40/60 bis 90/10 enthält.

Dimerfettsäure basierte Amine, auch Dimer Diamine genannt, sind kommerziell erhältliche Amine mit zwei primären Amingruppen. Sie werden typischerweise eingesetzt zum Flexibilisieren von Epoxidharz- oder Polyamid-Hotmelt-Klebstoffen. Sie basieren zu einem hohen Teil auf nachwachsenden Rohstoffen und sind sehr hydrophob. Sie sind aber zu reaktiv für die Verwendung mit Polyisocyanaten, auch für die Verwendung in einer Spritzapplikation, und teilweise schlecht mit Polyisocyanaten verträglich.

Blockierte Amine reagieren unter Feuchtigkeitsausschluss nicht mit Isocyanaten. Bei Zutritt von Feuchtigkeit findet die Raktion mit Isocyanaten unter Freisetzung des entsprechenden Aldehyds oder Ketons statt, wobei aber die Reaktionsgeschwindigkeit für Polyharnstoff-Anwendungen typischerweise unerwünscht langsam ist, da die zur Hydrolyse benötigte Feuchtigkeit nur allmählich hinzukommt.

Überraschenderweise wurde gefunden, dass auch hohe Mengen an Dimerfettsäure basierten Aminen **A1** als Härter in Polyharnstoff-Beschichtungen vorteilhaft einsetzbar sind, unter der Voraussetzung, dass freie und blockierte Amingruppen in einem Molverhältnis von 40/60 bis 90/10 vorhanden sind. Dies ermöglicht eine vorteilhafte Kombination aus guter Verarbeitbarkeit und schneller Aushärtung. Dabei können ein Teil der Amingruppen des Dimerfettsäure basierten Amin **A1** in blockierter Form vorliegen, oder es kann ein weiteres Amin **A2** mit blockierten Amingruppen vorhanden sein.

Die erfindungsgemässe Verwendung ermöglicht Polyharnstoff-Beschichtungen mit sehr schneller Aushärtung bei guter Verarbeitbarkeit mittels einer Zweikomponenten-Spritzapplikation, insbesondere mittels einer heizbaren Hochdruck-Spritzapparatur mit einer Mischkammer im Gegenstromverfahren.

Die aus der erfindungsgemässen Verwendung erhaltene Polyharnstoff-Beschichtung ist sehr tolerant in Bezug auf die Umgebungsbedingungen bei der Applikation. Sie ist bei tiefen Temperaturen bis zu -20 °C und bei hoher Luftfeuchtigkeit bis 100 % relative Luftfeuchtigkeit applizierbar. Nach der Aushärtung verfügt sie über ausgezeichnete Haftungseigenschaften, ausgezeichnete mechanische Eigenschaften mit hoher Dehnbarkeit und Flexibilität bei hoher Festigkeit, eine hohe Abriebfestigkeit gegenüber mechanischer Beanspruchung und eine sehr hohe Stabilität gegenüber hohen Temperaturen, UV-Strahlung, Feuchtigkeit und Chemikalien. Solche Polyharnstoff-Beschichtungen sind deshalb geeignet als Schutzbeschichtung für besonders beanspruchte Anwendungen, wie beispielsweise auf Dächern, in Lebensmittelbetrieben, Küchen, Spitälern, Schwimmbecken, Kläranlagen oder an Automobilen, Zügen und Schiffen, wo sie den Untergrund vor Feuchtigkeit und Chemikalien und Metalle oder Kunststoffe vor Korrosion schützen. Aufgrund der guten Beständigkeit gegenüber Chlorwasser ist die Polyharnstoff-Beschichtung besonders geeignet zum Schutz von Schwimmbecken und weiteren Wassersport-Bauwerken.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist die Verwendung eines Härters für die Aushärtung von mindestens einem Polyisocyanat, wobei der Härter mindestens ein Dimerfettsäure basiertes Amin **A1** und gegebenenfalls mindestens ein weiteres Amin **A2** mit jeweils freien und/oder blockierten Amingruppen enthält,
wobei der Härter freie Amingruppen und blockierte Amingruppen im Molverhältnis 40/60 bis 90/10 enthält.

Als "Dimerfettsäure basiertes Amin" wird ein Amin mit zwei primären Amingruppen bezeichnet, welches das Kohlenwasserstoff-Gerüst einer Dimerfettsäure enthält. Als "blockierte Amingruppen" werden primäre oder sekundäre Amingruppen bezeichnet, die in ihrer Reaktivität gegenüber Isocyanatgruppen chemisch blockiert sind, aber durch Einwirkung von Feuchtigkeit mittels Hydrolyse für die Reaktion mit Isocyanatgruppen unter Freisetzung des Blockierungsmittels wieder zugänglich sind.

Als "primär" wird eine Amingruppe bezeichnet, die an einen einzigen organischen Rest gebunden ist und zwei Wasserstoffatome trägt, als "sekundär" wird eine Amingruppe bezeichnet, die an zwei organische Reste, welche auch gemeinsam Teil eines Rings sein können, gebunden ist und ein Wasserstoffatom trägt, und als "tertiär" wird eine Amingruppe bezeichnet, die an drei organische Reste, welche auch zu zweit oder zu dritt Teil eines oder mehrerer Ringe sein können, gebunden ist und kein Wasserstoffatom trägt.

Mit "Poly" beginnende Substanznamen wie Polyisocyanat bezeichnen Substanzen, die zwei oder mehr der in ihrem Namen vorkommenden funktionellen Gruppen pro Molekül enthalten.

Als "aliphatisch gebunden" wird eine Amingruppe oder Isocyanatgruppe bezeichnet, die an ein aliphatisches oder cycloaliphatisches C-Atom gebunden ist.

Als "oligomer" wird ein Diisocyanat bezeichnet, wenn zwei, drei oder vier, insbesondere zwei oder drei, monomere Diisocyanate zu einem Polyisocyanat verbunden sind, wie insbesondere im Fall von Allophanaten, Isocyanuraten, Uretdionen oder Iminooxadiazindionen.

Als "Molekulargewicht" wird die molare Masse (in Gramm pro Mol) eines Moleküls bezeichnet. Als "mittleres Molekulargewicht" wird das Zahlenmittel des Molekulargewichts (Mₙ) einer polydispersen Mischung von oligomeren oder polymeren Molekülen bezeichnet. Es wird mittels Gelpermeationschromatographie (GPC) gegen Polystyrol als Standard bestimmt.

Eine gestrichelte Linie in den Formeln in diesem Dokument stellt jeweils die Bindung zwischen einem Substituenten und dem zugehörigen Molekülrest dar. Als "lagerstabil" wird eine Zusammensetzung bezeichnet, wenn sie bei Raumtemperatur in einem geeigneten Gebinde während längerer Zeit, typischerweise während mindestens drei Monaten bis zu sechs Monaten und mehr, aufbewahrt werden kann, ohne dass sie sich in ihren Anwendungs- oder Gebrauchseigenschaften durch die Lagerung in einem für ihren Gebrauch relevanten Ausmass verändert.

Als " Gelierzeit " wird die Zeitspanne zwischen dem Beginn des Vermischens der Komponenten und dem Gelieren der vermischten Zusammensetzung bezeichnet. Als "Raumtemperatur" wird eine Temperatur von 23 °C bezeichnet.

Alle im Dokument erwähnten Industriestandards und Normen beziehen sich auf die zum Zeitpunkt der Einreichung der Erstanmeldung gültigen Fassungen. Gewichtsprozente (Gewichts-%) bezeichnen Massenanteile eines Bestandteils einer Zusammensetzung oder eines Moleküls, bezogen auf die gesamte Zusammensetzung oder das gesamte Molekül, falls nichts anderes angeben. Die Begriffe "Masse" und "Gewicht" werden im vorliegenden Dokument synonym benutzt.

Bevorzugt beträgt der Gehalt an Dimerfettsäure basiertem Amin **A1** bezogen auf den gesamten Härter mindestens 30 Gewichts-%, bevorzugt mindestens 35 Gewichts-%. Ein solcher Härter ermöglicht eine besonders hohe Hydrolysestabilität und Chemikalienbeständigkeit. Ein solcher Härter ist aber auch besonders herausfordernd in Bezug auf die Kontrolle der Reaktionsgeschwindigkeit mit dem Polyisocyanat.

Weiterhin bevorzugt beträgt der Gehalt an Dimerfettsäure basierten Amin **A1** bezogen auf das Gesamtgewicht der im Härter enthaltenen gegenüber Isocyanaten reaktiven Bestandteilen mindestens 40 Gewichts-%, bevorzugt mindestens 45 Gewichts-%, und in einer Ausführungsform der Erfindung bevorzugt mindestens 50 Gewichts-%, insbesondere mindestens 60 Gewichts-%.

Bevorzugt sind die freien Amingruppen primäre Amingruppen. Dies ermöglicht besonders temperaturbeständige Polyharnstoff-Beschichtungen.

Bevorzugt sind die blockierten Amingruppen ausgewählt aus der Liste bestehend aus Aldimingruppen, Ketimingruppen und Oxazolidingruppen, bevorzugt Aldimingruppen und Ketimingruppen, insbesondere Aldimingruppen.

Aldimingruppen sind blockierte primäre Amingruppen der Formel 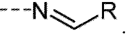 Sie werden erhalten aus der Reaktion eines primären Amins mit einem Aldehyd der Formel 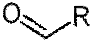 unter Freisetzung von Wasser.

Ketimingruppen sind blockierte primäre Amingruppen der Formel 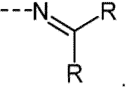 Sie werden erhalten aus der Reaktion eines primären Amins mit einem Keton der Formel 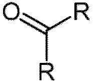 unter Freisetzung und Entfernung von Wasser.

Oxazolidingruppen sind blockierte sekundäre Amingruppen der Formel 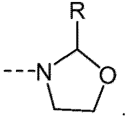 Sie werden erhalten aus der Reaktion einer Aminoethanolgruppe mit einem Aldehyd der Formel 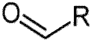 unter Freisetzung und Entfernung von Wasser.

Besonders bevorzugt sind Aldimingruppen. Ein Dialdimin setzt bei der Hydrolyse ein Diamin mit zwei primären Amingruppen frei, was bei der Reaktion mit Polyisocyanaten unsubstituierte Harnstoffbindungen der Formel 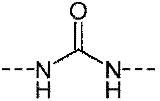 ergibt, während ein Bisoxazolidin bei der Hydrolyse ein Diamin mit zwei sekundären Aminoethanolgruppen freisetzt, was bei der Reaktion mit Polyisocyanaten vorerst

Hydroxyethyl-substituierte Harnstoffbindungen der Formel 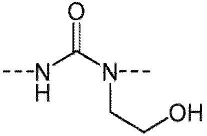 ergibt, welche durch Reaktion der Hydroxylgruppe mit weiteren Isocyanatgruppen weiter vernetzen können. Solche substituierte Harnstoffgruppen schwächen jedoch die mechanische Festigkeit und die Temperaturstabilität nach der Aushärtung, und typischerweise reagiert nur ein kleiner Teil der Hydroxylgruppen mit Isocyanatgruppen, wobei nicht umgesetzte Hydroxylgruppen die Beständigkeit der Polyharnstoff-Beschichtung gegenüber Hydrolyse schwächen können.

Bevorzugt enthält der Härter freie Amingruppen und blockierte Amingruppen im Molverhältnis von 45/55 bis 80/20. Ein solcher Härter ermöglicht eine besonders attraktive Kombination aus genügend langer Gelierzeit für eine Spritzapplikation und schneller Aushärtung nach der Applikation.

Bevorzugt enthalten das Dimerfettsäure basierte Amin **A1** und das gegebenenfalls vorhandene Amin **A2** jeweils mindestens zwei Amingruppen. Solche Amine reagieren mit Polyisocyanaten unter Vernetzung und Aushärtung.

Bevorzugt weist das Dimerfettsäure basierte Amin **A1** ein Amin-Equivalentgewicht von 200 bis 400 g/eq, bevorzugt 250 bis 300 g/eq, auf.

Bevorzugt weist das Dimerfettsäure basierte Amin **A1** zwei primäre Amingruppen auf. Diese sind insbesondere jeweils an ein aliphatisches C-Atom gebunden.

Ein geeignetes Dimerfettsäure basiertes Amin **A1** ist kommerziell erhältlich, insbesondere als Priamine^{®} 1071, Priamine^{®} 1073, Priamine^{®} 1074 oder Priamine^{®} 1075 (alle von Cargill). Sie werden auch als "Dimer Diamine" bezeichnet.

Wird ein solches Dimerfettsäure basiertes Amin **A1** ohne Mitverwendung von blockierten Amingruppen als Härter für Polyisocyanate eingesetzt, so ist die Reaktivität zu schnell für eine gute Verarbeitbarkeit mittels Spritzapparatur.

In einer bevorzugten Ausführungsform der Erfindung sind ein Teil der Amingruppen des Dimerfettsäure basierten Amin **A1** Aldimin- oder Ketimingruppen blockiert, insbesondere als Aldimingruppen, so dass das Molverhältnis zwischen freien und blockierte Amingruppen im Bereich von 40/60 bis 90/10, insbesondere 45/55 bis 80/20, liegt.

Ein solches teilweise blockiertes Dimerfettsäure basiertes Amin **A1** wird insbesondere erhalten durch Umsetzung des Dimerfettsäure basierten Amin **A1** mit mindestens einem Aldehyd oder Keton unter Freisetzung und Entfernung von Wasser, wobei das molare Verhältnis zwischen den Amingruppen und dem Aldehyd oder Keton im Bereich von 0.10 bis 0.60, bevorzugt 0.20 bis 0.55, liegt.

In einer bevorzugten Ausführungsform der Erfindung enthält der Härter mindestens ein weiteres Amin **A2,** wobei das weitere Amin **A2** kein Dimerfettsäure-basiertes Amin ist und insbesondere ein Amin-Equivalentgewicht von 44 bis 2'000 g/eq, bevorzugt 51 bis 1'200 g/eq, insbesondere 58 bis 500 g/eq, aufweist.

Bevorzugt ist das weitere Amin **A2** ausgewählt aus der Liste bestehend aus Isophorondiamin, 1,5-Pentandiamin, 1,6-Hexandiamin, 2,2(4),4-Trimethyl-1,6-hexandiamin, 1,3-Bis(aminomethyl)cyclohexan, 1,4-Bis(aminomethyl)cyclohexan, 1,2-Diaminocyclohexan, 1,3-Diaminocyclohexan, 1,4-Diaminocyclohexan, 2(4)-Methyl-1,3-diaminocyclohexan, Bis(4-aminocyclohexyl)methan, 1,3-Bis(aminomethyl)benzol, Polyoxypropylendiaminen mit einem mittleren Molekulargewicht Mₙ im Bereich von 200 bis 4'000 g/mol, bevorzugt 200 bis 2'000 g/mol, insbesondere 200 bis 500 g/mol, und Polyoxypropylentriaminen mit einem mittleren Molekulargewicht Mₙ im Bereich von 300 bis 5'000 g/mol, insbesondere 300 bis 500 g/mol. Davon besonders bevorzugt ist Isophorondiamin.

In einer besonders bevorzugten Ausführungsform der Erfindung enthält der Härter ein Dimerfettsäure basiertes Amin **A1** mit freien Amingruppen und mindestens ein weiteres Amin **A2** mit blockierten Amingruppen. Dabei wird das Verhältnis zwischen dem freien Amin **A1** und dem blockierten Amin **A2** so gewählt, dass das Molverhältnis zwischen freien Amingruppen und blockierten Amingruppen im beanspruchten Bereich liegt.

Eine solche Kombination stellt einen besonders attraktiven Weg zu einer vorteilhaften Kombination aus genügend langer Gelierzeit und schneller Aushärtung dar.

Als blockiertes Amin **A2** bevorzugt sind Aldimine oder Ketimine, insbesondere Umsetzungsprodukte aus den bereits genannten Aminen **A2** mit einem Aldehyd oder Keton im molaren Verhältnis zwischen den Amingruppen und dem Aldehyd oder Keton von mindestens 0.9, insbesondere mindestens 1.0, unter Freisetzung und Entfernung von Wasser.

Als Aldehyd geeignet ist insbesondere Isobutyraldehyd, Pivalaldehyd, 2-Methylbutanal, 2-Ethylbutanal, 2-Methylpentanal, 2-Ethylhexanal, Octanal, Nonanal, Decanal, Undecanal, 2-Methyl-undecanal, Dodecanal, 2-Phenylpropanal, Cyclopentancarboxaldehyd, Cyclohexancarboxaldehyd, Benzaldehyd oder ein substituierter Benzaldehyd.

Als Keton geeignet ist insbesondere Aceton, Methylethylketon, Methylpropylketon, Methylisopropylketon, Methylisobutylketon, Methylpentylketon, Methylisopentylketon, Diethylketon, Dipropylketon, Diisopropylketon, Dibutylketon, Diisobutylketon, Cyclopentanon, Cyclohexanon, Acetylaceton oder Actetophenon.

Als blockiertes Amin **A2** besonders geeignet ist N,N'-Diisobutylidenisophorondi-amin, kommerziell erhältlich beispielsweise als Vestamin^{®} A-139 (von Evonik). Als blockiertes Amin **A2** weiterhin besonders geeignet ist N,N'-Dibenzylidenpoly-oxypropylendiamin mit mittlerem Molekulargewicht Mn von 400 bis 600 g/mol, kommerziell erhältlich beispielsweise als Aldirez^{®} BH (von Incorez).

Als blockiertes Amin **A2** weiterhin geeignet ist ein Amin **A2** mit mindestens einer Oxazolidingruppe, bevorzugt ein Bis-Oxazolidin.

Ein als blockiertes Amin **A2** geeignetes Bis-Oxazolidin ist insbesondere ein Umsetzungsprodukt von Diethanolamin mit einem Aldehyd im Molverhältnis 1:1 unter Freisetzung und Entfernung von Wasser und nachfolgender Umsetzung des erhaltenen Oxazolidins der Formel 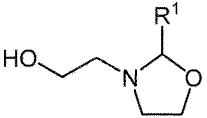 mit einem Diisocyanat oder mit einem Carbonat oder CO₂ zu einem Bis-Oxazolidin der Formel (I) oder (II), 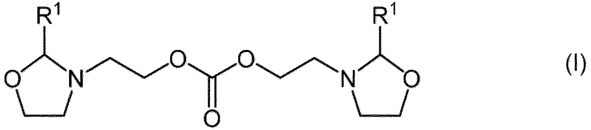 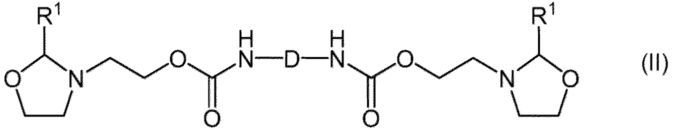 wobei R¹ für den Rest des Aldehyds nach Entfernung der C=O Gruppe steht und D für den Rest des Diisocyanats nach Entfernung der beiden Isocyanatgruppen steht.

Bevorzugt steht R¹ für 2-Propyl, 3-Heptyl, Phenyl oder einen substituierten Phenylrest.

Bevorzugt steht D für 1,6-Hexylen.

Ein geeignetes Bis-Oxazolidin ist kommerziell insbesondere erhältlich als Incozol^{®} LV oder Incozol^{®} 4 (beide von Incorez.)

Neben dem Dimerfettsäure basierten Amin **A1** und dem gegebenenfalls vorhandenen weiteren Amin **A2** kann der Härter weitere mit Isocyanaten reaktive Verbindungen enthalten, insbesondere weitere Aminhärter, mehrfunktionelle Alkohole, Polyole oder Polymercaptane.

In einer bevorzugten Ausführungsform enthält der Härter ein Dimerfettsäure basiertes Amin **A1** mit freien Amingruppen, mindestens ein weiteres Amin **A2** mit blockierten Amingruppen und mindestens ein weiteres Amin **A3** mit freien Amingruppen, wobei das weitere Amin **A3** verschiedenen ist von den Aminen **A1** und **A2.**

Als weiteres Amin **A3** geeignet ist insbesondere ein Polyetheramin, insbesondere ein Polyoxypropylendi- oder triamin wie beispielsweise Jeffamine^{®} D-230, D-400, D-2000, D-4000, T-403, T-3000 oder T-5000 (alle von Huntsman).

Als Amin **A3** weiterhin geeignet ist insbesondere ein Polyaminoamid wie beispielsweise das unter dem Handelsnamen Merginamid^{®} L 375 von Hobum erhältliche Polyaminoamid.

In einer bevorzugten Ausführungsform der Erfindung enthält der Härter ein Dimerfettsäure basiertes Amin mit freien Amingruppen, ein von Isophorondiamin abgeleitetes blockiertes Amin und mindestens ein Polyetheramin mit freien Amingruppen.

Bevorzugt enthält der Härter mindestens einen weiteren Bestandteil ausgewählt aus der Liste bestehend aus Füllstoffen, Pigmenten, Haftvermittlern, Stabilisatoren, Entschäumern, Entlüftern und Netzmitteln.

Bevorzugte Füllstoffe sind gemahlene oder gefällte Calciumcarbonate, welche gegebenenfalls mit Fettsäuren, insbesondere Stearaten, beschichtet sind, Baryte (Schwerspate), Quarzmehle, Quarzsande, Dolomite, Wollastonite, Kaoline, calcinierte Kaoline, Schichtsilikate wie Glimmer oder Talk, Zeolithe, Aluminiumhydroxide, Magnesiumhydroxide, Kieselsäuren inklusive hochdisperse Kieselsäuren aus Pyrolyseprozessen, industriell hergestellte Russe, Graphit, Metall-Pulver beispielsweise von Aluminium, Kupfer, Eisen, Silber oder Stahl, PVC-Pulver, PTFE-Pulver oder Hohlkugeln. Besonders bevorzugt sind Calciumcarbonate, Baryte, Quarzmehle, Quarzsande, Kaoline oder Aluminiumhydroxide.

Bevorzugte Pigmente sind Titandioxid, Chromoxid, Eisenoxide oder organische Pigmente. Bevorzugt werden Pigmente eingesetzt als pastöse Zubereitung, auch Farbpaste genannt, insbesondere als Dispersion in einem (Meth)acrylat, insbesondere einem Dimethacrylat.

Bevorzugte Haftvermittler sind Titanate oder Organoalkoxysilane wie insbesondere Epoxysilane, insbesondere 3-Glycidoxypropyltrimethoxysilan oder 3-Glycidoxypropyltriethoxysilan, Aminosilane, Iminosilane, Mercaptosilane, Vinylsilane, (Meth)acrylosilane, Carbamatosilane, Alkylsilane, S-(Alkylcarbonyl)mercaptosilane oder oligomere Formen dieser Silane.

Der Härter kann weitere üblicherweise in Polyurethan- oder Polyharnstoff-Zusammensetzungen eingesetzte Substanzen enthalten, insbesondere Reaktivverdünner wie insbesondere (Meth)acrylate, Lösemittel, Weichmacher, Katalysatoren wie insbesondere Organozinn(IV)-Verbindungen, Trocknungsmittel, Fasern oder Verdickungsmittel.

Bevorzugt enthält der Härter nur einen geringen Gehalt an Lösemitteln, bevorzugt weniger als 5 Gewichts-%, insbesondere weniger als 1 Gewichts-%, Lösemittel mit einem Siedepunkt bei Normaldruck von weniger als 250 °C bezogen auf den gesamten Härter.

Bevorzugt weist der Härter eine niedrige Viskosität auf, insbesondere eine Viskosität bei 23 °C im Bereich von 0.1 bis 5 Pa.s, bevorzugt 0.1 bis 2 Pa.s, insbesondere 0.1 bis 1.5 Pa.s, gemessen mittels Kegel-Platte Rotationsviskosimeter bei einer Scherrate von 50 s⁻¹. Ein solcher Härter ist besonders geeignet für eine Applikation mittels Spritzapparatur.

Der beschriebene Härter wird verwendet für die Aushärtung von mindestens einem Polyisocyanat. Als Polyisocyanat geeignet sind insbesondere solche mit aliphatisch gebundenen Isocyanatgruppen, insbesondere die im Folgenden erwähnten Polyisocyanate.

Bevorzugt wird der Härter in einer solchen Menge eingesetzt, dass das Verhältnis der Anzahl Isocyanatgruppen zur Summe der Anzahl freie Amingruppen und blockierte Amingruppen im Bereich von 0.9 bis 2.0, bevorzugt 1.0 bis 1.7, liegt. Ein weiterer Gegenstand der Erfindung ist eine Polyharnstoff-Beschichtung umfassend
- eine Komponente **K1** umfassend den vorgängig beschriebenen Härter, und
- eine Komponente **K2** enthaltend mindestens ein Polyisocyanat, insbesondere mindestens ein Polyisocyanat mit aliphatisch gebundenen Isocyanatgruppen.

Die Komponenten **K1** und **K2** sind jeweils separat verpackt in einem feuchtigkeitsdichten Gebinde und lagerstabil.

Bevorzugt beträgt der Gehalt an Dimerfettsäure basiertem Amin **A1** bezogen auf die gesamte Komponente **K1** mindestens 30 Gewichts-%, bevorzugt mindestens 35 Gewichts-%.

Bevorzugt enthält die Komponente **K1** freie Amingruppen und blockierte Amingruppen im Molverhältnis 40/60 bis 90/10, insbesondere 45/55 bis 80/20.

Bevorzugt weist das Polyisocyanat ein mittleres Isocyanat-Equivalentgewicht von 145 bis 500 g/eq, bevorzugt 158 bis 350 g/eq, auf.

Bevorzugt weist das Polyisocyanat einen NCO-Gehalt von 8.4 bis 29.0 Gew.%, insbesondere 12.0 bis 26.6 Gew.%, bezogen auf das Polyisocyanat auf.

Weiterhin bevorzugt weist das Polyisocyanat eine mittlere Isocyanat-Funktionalität von mindestens 2.2, bevorzugt mindestens 2.5, insbesondere mindestens 2.8, auf.

Bevorzugt enthält das Polyisocyanat aliphatisch gebundene Isocyanatgruppen. Dies ermöglicht Polyharnstoff-Beschichtungen mit guter Verarbeitbarkeit und guter Lichtstabilität.

Bevorzugt als Polyisocyanat sind Oligomere von Diisocyanaten mit aliphatisch gebundenen Isocyanatgruppen, wobei diese Umsetzungsprodukte mit Polyolen enthalten können, und/oder Isocyanat-funktionelle Umsetzungsprodukte von Diisocyanaten mit aliphatisch gebundenen Isocyanatgruppen mit Polyolen, wobei diese Umsetzungsprodukte bevorzugt von nicht umgesetztem monomerem Diisocyanat befreit wurden, insbesondere mittels Destillation.

Geeignete Diisocyanate mit aliphatisch gebundenen Isocyanatgruppen sind insbesondere 1,6-Hexandiisocyanat (HDI), Perhydro-2,4(6)-toluendiisocyanat (H₆TDI), Perhydro-4,4'-diphenylmethandiisocyanat (H₁₂MDI), 2,2(4),4-Trimethyl-1,6-hexandiisocyanat (TMDI), Cyclohexan-1,3-diisocyanat, Cyclohexan-1,4-diisocyanat, 1,3-Bis(isocyanatomethyl)cyclohexan, 1,4-Bis(isocyanatomethyl)cyclohexan, m-Xylendiisocyanat oder p-Xylendiisocyanat. Davon bevorzugt ist 1,6-Hexandiisocyanat (HDI).

Besonders bevorzugte Polyisocyanate sind Oligomere von HDI, insbesondere HDI-Oligomere enthaltend Uretdione und/oder Isocyanurate und/oder Iminooxadiazindione und/oder Allophanate, wobei diese jeweils Umsetzungsprodukte mit Polyolen enthalten können, insbesondere mit Polyetherpolyolen oder mit bei Raumtemperatur flüssigen Polyesterpolyolen.

Bevorzugt weist die Komponente **K2** einen NCO-Gehalt bezogen auf die Summe aller Isocyanatgruppen-haltigen Bestandteile von 8.4 bis 29.0 Gew.%, insbesondere 12.0 bis 26.6 Gew.%, auf.

Eine solche Komponente **K2** ist besonders niedrigviskos und ermöglicht Polyharnstoff-Beschichtungen mit guter Verarbeitbarkeit mittels Spritzapparatur, schneller Aushärtung und hoher Festigkeit bei guter Dehnbarkeit.

Bevorzugt enthält die Komponente **K2** weiterhin mindestens einen Reaktivverdünner, insbesondere mindestens ein (Meth)acrylat. Besonders bevorzugt als Reaktivverdünner ist ein Methacrylat, insbesondere ein handelsübliches Dimethacrylat.

Bevorzugt weist die Komponente **K2** eine niedrige Viskosität auf, insbesondere eine Viskosität bei 23 °C im Bereich von 0.5 bis 5 Pa.s, bevorzugt 0.5 bis 2 Pa.s, insbesondere 0.1 bis 1.5 Pa.s, gemessen mittels Kegel-Platte Rotationsviskosimeter bei einer Scherrate von 50 s⁻¹. Eine solche Komponente ist besonders geeignet für eine Applikation mittels Spritzapparatur.

Bevorzugt sind die Komponenten **K1** und **K2** in einer solchen Menge vorhanden, dass das Verhältnis der Anzahl Isocyanatgruppen zur Summe der Anzahl freie Amingruppen und blockierte Amingruppen im Bereich von 0.9 bis 2.0, bevorzugt 1.0 bis 1.6, liegt.

Die Polyharnstoff-Beschichtung kann weitere Substanzen enthalten, insbesondere Füllstoffe, Pigmente, Haftvermittler, Stabilisatore, Entschäumer, Entlüfter, Netzmittel, Reaktivverdünner wie insbesondere (Meth)acrylate, Lösemittel, Weichmacher, Katalysatoren wie insbesondere Organozinn(IV)-Verbindungen, Trocknungsmittel, Fasern oder Verdickungsmittel, wobei solche weitere Substanzen als Bestandteil der Komponente **K1** und/oder **K2** vorhanden sein können.

Bevorzugt enthält die Polyharnstoff-Beschichtung mindestens einen weiteren Bestandteil ausgewählt aus der Liste bestehend aus Füllstoffen, Pigmenten, Haftvermittlern, Stabilisatoren, Entschäumern, Entlüftern und Netzmitteln.

Bevorzugt enthält die Polyharnstoff-Beschichtung nur einen geringen Gehalt an Lösemitteln, bevorzugt weniger als 5 Gewichts-%, insbesondere weniger als 1 Gewichts-%, Lösemittel mit einem Siedepunkt bei Normaldruck von weniger als 250 °C bezogen auf die gesamte Polyharnstoff-Beschichtung.

Die Komponenten **K1** und **K2** werden getrennt voneinander hergestellt. Dabei werden die Inhaltsstoffe der jeweiligen Komponente miteinander vermischt, so dass eine makroskopisch homogene Flüssigkeit entsteht. Die Komponenten **K1** und **K2** werden in voneinander getrennten Gebinden gelagert und sind jeweils für sich allein lagerstabil.

Bei der Applikation der Polyharnstoff-Beschichtung werden die Komponenten **K1** und **K2** miteinander vermischt. Um die Viskosität der Komponenten zu senken kann es vorteilhaft sein, die Komponenten vor der Applikation aufzuwärmen, insbesondere auf eine Temperatur im Bereich von 40 bis 80 °C. Das Mischungsverhältnis wird dabei so gewählt, dass das Verhältnis der Anzahl Isocyanatgruppen zur Summe der Anzahl freie Amingruppen und blockierte Amingruppen im bevorzugten Bereich liegt. Bevorzugt sind die Komponenten **K1** und **K2** so formuliert, dass das Mischungsverhältnis ungefähr 1:1 in Volumen beträgt.

Das Mischen erfolgt bevorzugt bei Umgebungstemperatur oder besonders bevorzugt bei erhöhter Temperatur, bevorzugt bei einer Temperatur von 15 bis 80 °C, besonders bevorzugt 40 bis 80 °C, insbesondere 60 bis 80 °C.

Mit dem Vermischen der Komponenten **K1** und **K2** beginnt die Polyharnstoff-Beschichtung durch die einsetzende chemische Reaktion auszuhärten. Dabei reagieren freie Amingruppen sehr schnell mit vorhandenen Isocyanatgruppen, und blockierte Amingruppen reagieren bei Kontakt mit Feuchtigkeit unter Hydrolyse ebenfalls mit den Isocyanatgruppen. Weitere vorhandene Isocyanatgruppen reagieren mit gegebenenfalls in der Zusammensetzung vorhandenen weiteren Reaktivgruppen, oder schliesslich mit Feuchtigkeit.

Bevorzugt hat die Polyharnstoff-Beschichtung im Norrmklima eine Gelierzeit im Bereich von > 2 s bis 15 min, bevorzugt 3 s bis 10 min, insbesondere 3 s bis 15 min.

Bevorzugt hat die Polyharnstoff-Beschichtung eine Zeit bis zur Begehbarkeit im Bereich von höchstens 1 Stunde, bevorzugt höchstens 45 min, insbesondere höchstens 30 min.

Das Vermischen der Komponenten und die Applikation der vermischten Zusammensetzung erfolgt bevorzugt mittels einer Spritzapparatur, insbesondere mit einer Hochdruck-Spritzapparatur und Vermischung im Gegenstromverfahren, wobei die Komponenten bzw. die vermischte Zusammensetzung bevorzugt erwärmt werden, bevorzugt auf eine Temperatur im Bereich von 40 bis 80 °C, insbesonders 60 bis 80 °C.

Die Applikation erfolgt bevorzugt bei Umgebungsbedingungen, bevorzugt bei einer Temperatur von - 20 bis 50 °C, insbesondere 0 bis 45 °C, und bei einer realtiven Luftfeuchtigkeit von 15 bis 100 %, bevorzugt 20 bis 90 %.

Die Applikation erfolgt insbesondere als aufgespritzte Beschichtung auf mindestens ein Substrat.

Geeignete Substrate sind insbesondere
- Beton, Mörtel, Zementestrich, Faserzement, Backstein, Ziegel, Gips oder Natursteine wie Granit oder Marmor;
- Reparatur- oder Nivelliermassen auf Basis PCC (Polymer-modifizierter Zementmörtel) oder ECC (Epoxidharz-modifizierter Zementmörtel);
- Metalle oder Legierungen wie Aluminium, Eisen, Stahl, Kupfer, weitere Buntmetalle, inklusive oberflächenveredelte Metalle oder Legierungen wie verzinkte oder verchromte Metalle;
- Asphalt oder Bitumen;
- Kunststoffe wie Hart- und Weich-PVC, Polycarbonat, Polystyrol, Polyester, Polyamid, PMMA, ABS, SAN, Epoxidharze, Phenolharze, PUR, POM, TPO, PE, PP, EPM oder EPDM, jeweils unbehandelt oder oberflächenbehandelt, beispielsweise mittels Plasma, Corona oder Flammen;
- Faserverstärkte Kunststoffe, wie Kohlefaser-verstärkte Kunststoffe (CFK), Glasfaser-verstärkte Kunststoffe (GFK), Naturfaser-verstärkte Kunststoffe (NFK) und Sheet Moulding Compounds (SMC);
- Holz, mit Harzen, beispielsweise Phenol-, Melamin- oder Epoxidharzen, gebundene Holzwerkstoffe, Harz-Textil-Verbundwerkstoffe oder weitere sogenannte Polymer-Composites;
- Isoliermaterialen, insbesondere Schäume, insbesondere aus EPS, XPS, PUR, PIR, Aerogel oder geschäumtes Glas (Foamglas), oder Fasern aus Steinwolle oder Glaswolle,
- beschichtete oder lackierte Substrate, insbesondere lackierte Fliesen, gestrichener Beton, pulverbeschichtete Metalle oder Legierungen oder lackierte Bleche;
- Beschichtungen, Farben oder Lacke;
- Glas oder Glaskeramik;
- Leder, Textilien oder Papier.

Die Substrate sind bevorzugt frei von Öl, Fett oder Staub. Sie können bei Bedarf vorbehandelt sein, insbesondere durch physikalische und/oder chemische Reinigungsverfahren oder das Aufbringen eines Aktivators oder eines Primers.

Im Fall einer unebenen Oberfläche wie insbesondere einer unebenen Betonfläche mit Löchern wird die Oberfläche vor der Applikation bevorzugt mittels einer geeigneten Spachtelmasse ausgeebnet.

Die Polyharnstoff-Beschichtung wird bevorzugt verwendet als elastische bis zähelastische Schutzbeschichtung, insbesondere zum Schutz vor dem Eindringen von Feuchtigkeit, Wasser oder weiteren Flüssigkeiten oder Chemikalien, als Schutz vor mechanischer Beanspruchung, sowie als Schutz von Metallen oder Kunststoffen vor Korrosion oder Schäden durch UV-Strahlung.

Eine solche flüssig applizierte Schutzbeschichtung bildet eine nahtlose Schicht auf dem Substrat. Dies ist besonders vorteilhaft im Vergleich mit einer Abdichtung mittels vorgefertigten Membranen, welche in Bahnen verlegt werden, die mittels Schweissen oder Verkleben verbunden werden, wobei an den Nähten undichte Stellen auftreten können.

Bevorzugt wird die Polyharnstoff-Beschichtung verwendet als Dachbeschichtung, Brückenbeschichtung, Balkon- oder Terrassenbeschichtung, zum Abdichten von Bauwerken, insbesondere Fundamenten, als Bodenbeschichtung in Parkhäusern, Garagen, Kellern, Lagerhallen oder Industriehallen, in der Lebensmittelindustrie, in Küchen oder Spitälern, als Schutzbeschichtung in Trinkwasseranlagen, Schwimmbädern, Kläranlagen, Pipelines, im Bergbau, für Marinebauten, als Beschichtung für den Korrosion- und Verschleissschutz von Fahrzeugen wie Automobilen, Zügen oder Schiffen, oder Rotorblättern von Windturbinen, sowie als Schutzbeschichtung für Kunststoffe aller Art.

Die Polyharnstoff-Beschichtungen ist sehr tolerant in Bezug auf die Umgebungsbedingungen bei der Applikation. Nach der Aushärtung verfügt sie über ausgezeichnete Haftungseigenschaften, ausgezeichnete mechanische Eigenschaften mit hoher Dehnbarkeit und Flexibilität bei hoher Festigkeit, eine hohe Abriebfestigkeit und eine sehr hohe Stabilität gegenüber hohen Temperaturen, UV-Stahlung, Feuchtigkeit und Chemikalien. Solche Polyharnstoff-Beschichtungen sind deshalb geeignet für besonders beanspruchte Bereiche.

Besonders bevorzugt wird die Polyharnstoff-Beschichtung verwendet als Schutzbeschichtung für Schwimmbecken und weitere Wassersport-Bauwerke, wo die Beschichtung aufgrund ihrer guten Beständigkeit gegenüber Chlorwasser und UV-Strahlung einen dauerhaften Schutz der Bauten vor Nässe, Korrosion und mechanischer Beanspruchung ermöglicht.

Ein weiterer Gegenstand der Erfindung ist eine Methode zum Beschichten, wobei die Komponenten **K1** und **K2** der Polyharnstoff-Beschichtung in einer Zweikomponenten-Spritzapparatur vermischt und die vermischte Beschichtung auf mindestens ein Substrat appliziert wird.

Bevorzugt als Spritzapparatur ist eine Hochdruck-Spritzapparatur mit Vermischung im Gegenstromverfahren.

Bevorzugt ist die Spritzapparatur heizbar, wobei die einzelnen Komponenten vor dem Vermischen auf eine Temperatur von 40 bis 80 °C, bevorzugt 60 bis 80 °C, aufgewärmt werden und sowohl die Mischkammer als auch der Schlauch zur Spritzpistole entsprechend heizbar sind.

Bevorzugt wird die vermischte Beschichtung in einer Schichtdicke von 0.1 bis 8 mm, bevorzugt 0.2 bis 4 mm, appliziert.

Für den Fall, dass der Untergrund sehr uneben ist, beispielsweise eine unebene Betonfläche mit Löchern und Vertiefungen, wird der Untergrund vor der Applikation der Beschichtung bevorzugt mittels einem Spachtel ausgeebnet, beispielsweise mit einem Spachtel auf Mörtel-, Epoxidharz- oder Polyurethanbasis. Gegebenenfalls ist das Substrat, auf welches die Polyharnstoff-Beschichtung appliziert wird, beschichtet mit einem Primer, insbesondere einem Primer auf Isocyanat- oder Epoxidharz-Basis. Gegebenenfalls ist ein solcher Primer mit Sand abgestreut.

Gegebenenfalls wird auf die ausgehärtete Polyharnstoff-Beschichtung ein Topcoat aufgetragen, insbesondere in einer Schichtdicke von 0.1 bis 0.5 mm. Ein solcher Topcoat kann insbesondere den Aspekt der Beschichtung verändern, insbesondere in Bezug auf Glanz, Transparenz oder Farbeffekte.

Ein weiterer Gegenstand der Erfindung ist die ausgehärtete Beschichtung, erhalten aus dem Vermischen der Komponenten **K1** und **K2** der beschriebenen Polyharnstoff-Beschichtung, insbesondere mittels der beschriebenen Methode zum Beschichten.

Bevorzugt weist die ausgehärtete Beschichtung eine Zugfestigkeit von mindestens 5 MPa, bevorzugt mindestens 7.5 MPa, und eine Bruchdehnung von mindestens 5 %, bevorzugt mindestens 25 %, insbesondere mindestens 50 %, auf, bestimmt an während 7 Tagen im Normklima ausgehärteten Filmen mit einer Schichtdicke von 2 mm gemäss DIN 53504 mit Prüfkörpern vom Typ S2.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" ("NK") wird eine Temperatur von 23±1°C und eine relative Luftfeuchtigkeit von 50±5% bezeichnet.

Die verwendeten Chemikalien waren, sofern nicht anders bezeichnet, von Sigma-Aldrich Chemie GmbH.

**Viskositäten** wurden gemessen bei einer Temperatur von 23 °C mittels Kegel-Platte Rotationsviskosimeter (Anton Paar M302) mit einer Scherrate 50 s⁻¹.

### Verwendete Substanzen und Abkürzungen:

| | |
|---|---|
| Diamin-**1** | Dimerfettsäure basiertes Diamin, Amin-Equivalentgewicht 274 g/eq, Priamine^{®} 1075 von Cargill |
| Polyetheramin-**1** | Poly(oxy-1,2-propylen)diamin, Amin-Equivalentgewicht 120 g/eq, Jeffamine^{®} D-230 von Huntsman |
| Polyetheramin-**2** | Poly(oxy-1,2-propylen)diamin, Amin-Equivalentgewicht 1028 g/eq, Jeffamine^{®} D-2000 von Huntsman |
| Polyaminoamid | Amin-Equivalentgewicht 150 g/eq, Merginamid^{®} L 375 von Worlée |
| Aldimin-**1** | N,N'-Diisobutylidenisophorondiamin, Aldimin-Equivalentgewicht 140 g/eq, Vestamin^{®} A 139 von Evonik |
| Oxazolidin | Bis-Oxazolidin, Oxazolidin-Equivalentgewicht 172 g/eq, Incozol^{®} LV von Incorez |
| Polyisocyanat-**1** | HDI-Oligomer, NCO-Gehalt 23.5 Gew.%, NCO-Equivalentgewicht 179 g/eq, Desmodur^{®} N 3900 von Covestro |
| Polyisocyanat-**2** | HDI-Oligomer, NCO-Gehalt 23.0 Gew.%, NCO-Equivalentgewicht 183 g/eq, Desmodur^{®} N 3600 von Covestro |
| Polyisocyanat-**3** | NCO-Gehalt 15.0 Gew., Umsetzungsprodukt von 436 Gewichtsteilen HDI-Oligmer (Basonat^{®} HA 3000, NCO-Gehalt 18.5 Gew.%, von BASF) und 64 Gewichtsteilen Polyesterdiol (Oxyester^{®} T 1136, OH-Zahl 112 mg KOH/g, von Evonik) |
| Acrylat-**1** | Decandiol-dimethacrylat, Sartomer^{®} SR 261 von Arkema |
| Acrylat-**2** | 1,4-Butandiol-dimethacrylat, Sartomer^{®} SR 214 von Arkema |

### Beispiele B1 bis B13:

Für jedes Beispiel wurden die in den Tabellen 1 und 2 angegebenen Inhaltsstoffe der ersten Komponente **K1** in den angegebenen Mengen (in Gewichtsteilen) vermischt und während 14 Tagen in einem verschlossenen Gebinde aufbewahrt. Als zweite Komponente **K2** wurde das in den Tabellen 1 und 2 angegebene Polyisocyanat in der angegebenen Menge (in Gewichtsteilen) eingesetzt. Anschliessend wurden die Komponenten **K1** und **K2** jedes Beispiels von Hand mittels Spatel gut vermischt und dabei die Gelierzeit wie folgt beschrieben bestimmt.

Die **Gelierzeit** (Zeitspanne zwischen dem Beginn des Vermischens der Komponenten und der Gelierung) wurde bestimmt, indem 10 g der vermischten Zusammensetzung mittels eines Spatels in regelmässigen Zeitabständen bewegt wurden, bis die Masse gelierte. Im Fall einer sehr schnellen Gelierung im Bereich von wenigen Sekunden erfolgte das Gelieren bereits während dem Vermischen der Komponenten.

**Tabelle 1: Zusammensetzung und Eigenschaften von B1 bis B7.**

| **Beispiel** | **B1 (Ref.)** | **B2** | **B3** | **B4** | **B5 (Ref.)** | **B6 (Ref.)** | **B7 (Ref.)** |
|---|---|---|---|---|---|---|---|
| **Komponente K1:** | | | | | | | |
| Diamin-**1** | 100 | 75 | 66 | 60 | 55 | 50 | 25 |
| Aldimin-**1** | - | 25 | 34 | 40 | 45 | 50 | 75 |
| **Komponente K2:** | | | | | | | |
| Polyisocyanat-**1** | 65 | 81 | 87 | 90 | 94 | 97 | 112 |
| Verhältnis **V1** ¹ | | 61/39 | 50/50 | 43/57 | 39/61 | 34/66 | 15/85 |
| Gelierzeit | < 1 s | 10 s | 3 min | 8 min | 56 min | 56 min | >2 h |

| | | | | | | | |
|---|---|---|---|---|---|---|---|
| ¹ Verhältnis der Anzahl freie Amingruppen zur Anzahl blockierte Amingruppen | | | | | | | |

Aus der Tabelle 1 ist ersichtlich, dass das Vergleichsbeispiel **B1** mit dem Dimerfettsäure basierten Diamin-**1** ohne blockierte Amingruppen eine zu schnelle Gelierzeit für eine gute Verarbeitung mittels Spritzapplikation aufwies. Die erfindungsgemässen Beispiele **B2** bis **B4** mit einer Kombination aus Diamin-**1** und Aldimin-**1** im erfindungsgemässen Bereich zeigten eine für eine Spritzapplikation geeignete Gelierzeit. Die Vergleichsbeispiele **B5** bis **B7** mit einem zu hohen Gehalt an blockierten Amingruppen zeigte eine unerwünscht langsame Aushärtung.

**Tabelle 2: Zusammensetzung und Eigenschaften von B8 bis B13.**

| **Beispiel** | **B8** | **B9** | **B10 (Ref.)** | **B11 (Ref.)** | **B12 (Ref.)** | **B13 (Ref.)** |
|---|---|---|---|---|---|---|
| **Komponente K1:** | | | | | | |
| Diamin-**1** | 75 | 66 | 50 | 25 | - | - |
| Polyetheramin-**1** | - | - | - | - | 56 | - |
| Polyaminoamid | - | - | - | - | - | 62 |
| Aldimin-**1** | - | - | - | - | 44 | 38 |
| Oxazolidin | 25 | 34 | 50 | 75 | - | - |
| **Komponente K2:** | | | | | | |
| Polyisocyanat-**1** | 98 | 110 | 127 | 151 | 140 | 123 |
| Verhältnis **V1** ¹ | 65/35 | 55/45 | 39/61 | 17/83 | 60/40 | 60/40 |
| Gelierzeit | 90 s | 13 min | 45 min | >2 h | 2s | 2 s |

| | | | | | | |
|---|---|---|---|---|---|---|
| ¹ Verhältnis der Anzahl freie Amingruppen zur Anzahl blockierte Amingruppen | | | | | | |

Aus der Tabelle 2 ist ersichtlich, dass die erfindungsgemässen Beispiele **B8** und **B9** mit einer Kombination aus Diamin-1 und Oxazolidin im erfindungsgemässen Bereich eine für eine Spritzapplikation geeignete Gelierzeit zeigten, während das Vergleichsbeispiele **B10** und **B11** mit einem zu hohen Gehalt an blockierten Amingruppen eine unerwünscht lange Gelierzeit aufwiesen. Weiterhin ist ersichtlich, dass die Vergleichsbeispiele **B12** und **B13,** welche anstelle eines Dimerfettsäure basierten Diamins ein Polyetherdiamin bzw. ein Polyaminoamid enthielten, trotz Kombination mit dem Aldimin-**1** eine unerwünscht kurze Gelierzeit von nur 2 Sekunden zeigten.

### Beispiel B14

Gemäss den Angaben in Tabelle 3 wurde eine Komponente **K1** hergestellt. Dazu wurden die in der Tabelle 3 angegebenen Inhaltsstoffe in den angegebenen Mengen (in Gewichtsteilen) in einem Dissolver unter Vakuum und Ausschluss von Luftfeuchtigkeit vermischt und während 14 Tagen in einer feuchtigkeitsdichten Verpackung aufbewahrt.

Als Komponente **K2** wurde dann das Polyisocyanat-**1** in der in Tabelle 4 angegebenen Menge (in Gewichtsteilen) mittels einer Zweikomponenten-Kartusche mit aufgesetztem Statikmischer mit der Komponente K1 vermischt und in einer Schichtdicke von mehreren Millimetern flächig auf eine Polyethylenfolie appliziert. Zur Bestimmung der **Gelierzeit** wurde im Normklima durch Antippen der Oberfläche der frisch applizierten Beschichtung mittels einer Plastikpipette die Zeitspanne bestimmt, bis die applizierte Beschichtung nicht mehr an der Pipette haften blieb und somit geliert war.

Die Resultate sind in Tabelle 3 angegeben.

**Tabelle 3: Zusammensetzung und Eigenschaften von B14.**

| **Beispiel** | **B14** |
|---|---|
| **Komponente K1:** | |
| Diamin-**1** | 28.6 |
| Aldimin-**1** | 14.4 |
| Farbpaste | 20.0 |
| Füllstoffe | 29.5 |
| Molekularsieb 3A | 2.5 |
| UV Stabilisator | 1.3 |
| Netzmittel | 2.2 |
| Epoxysilan | 1.5 |
| **Komponente K2:** | |
| Polyisocyanat-**1** | 43.0 |
| Verhältnis **V1** ¹ | 50/50 |
| Viskosität Komponente **K1** | 1.44 Pa.s |
| Gelierzeit | 5 min |

| | |
|---|---|
| ¹ Verhältnis der Anzahl freie Amingruppen zur Anzahl blockierte Amingruppen | |

### Beispiele B15 bis B18 (gespritzte Polyharnstoff-Beschichtungen)

Für jedes Beispiel wurde gemäss den Angaben in Tabelle 4 eine Komponente **K1 (K1-1, K1-2, K1-3, K1-4)** hergestellt. Dazu wurden die in der Tabelle 4 angegebenen Inhaltsstoffe in den angegebenen Mengen (in Gewichtsteilen) in einem Dissolver unter Vakuum und Ausschluss von Luftfeuchtigkeit vermischt und während 14 Tagen in einer feuchtigkeitsdichten Verpackung aufbewahrt.

Zusätzlich wurden gemäss den Angaben in Tabelle 5 mehrere Komponenten **K2 (K2-1, K2-2)** hergestellt. Dazu wurden die in der Tabelle 5 angegebenen Inhaltsstoffe in den angegebenen Mengen (in Gewichtsteilen) in einem Dissolver unter Vakuum und Ausschluss von Luftfeuchtigkeit vermischt und in einer feuchtigkeitsdichten Verpackung aufbewahrt.

Anschliessend wurde jeweils eine Komponente **K1** und eine Komponente **K2** gemäss den Angaben in Tabelle 6 in einer heizbaren Spritzapparatur bei 70 °C im Volumenverhältnis 1:1 vermischt und auf eine ebene Bodenfläche in einer Schichtdicke von 2 mm appliziert bzw. aufgesprüht. Die Applikation erfolgte mittels einer Hochdruck-Dosiermaschine vom Typ GAMA Evolution VR, Mischkammer mit Gegenstrominjektion, Applikationspistole GAMA Master mit Rundstrahldüse Nr.0, Temperatur 70 °C, Sprühdruck 160 - 180 bar, Austragungsleistung 95 g/s. Die Umgebungsbedingungen waren 20 °C und 50 % relative Luftfeuchtigkeit.

Die **Gelierzeit (von Hand)** wurde bestimmt, indem zusätzlich zur maschinellen Applikation eine Portion von 10 g im Normklima von Hand mittels Spatel im Volumenverhältnis 1:1 vermischt und dabei die Zeit bis zum Gelieren wie für Beispiel 1 beschrieben bestimmt wurde.

Die **Zeit bis Begehbarkeit** wurde bestimmt, indem die Zeitspanne ab der Applikation der Beschichtung bis zur Begehbarkeit bestimmt wurde, indem die Festigkeit der applizierten Beschichtung mittels Berühren und Begehen geprüft wurde. Bei der Applikation wurde die **Verarbeitbarkeit** beurteilt. Als "sehr gut" wurde die Verarbeitbarkeit bezeichnet, wenn die vermischte Beschichtung ohne Anhärtungen in der Spritzdüse und ohne "Rüsselbildung" (Aufbau einer ausgehärteten Schicht an der Spritzdüse) appliziert werden konnte, und wenn die applizierte Beschichtung innerhalb einer Stunde soweit ausgehärtet war, dass sie begehbar war. Weiter wurde der **Aspekt** der applizierten, ausgehärteten Beschichtung beurteilt. Als "sehr schön" wurde ein homogenes, ebenmässiges Erscheinungsbild ohne Muster, Streifen, Wellen, Krater oder Blasen bezeichnet.

Zur Bestimmung der mechanischen Eigenschaften wurde die Beschichtung in einer Schichtdicke von 2 mm auf eine Polyethylenfolie appliziert und nach der Aushärtung von dieser abgelöst. Nach einer Lagerung während 7 Tagen im Normklima wurden Prüfkörper vom Typ S2 ausgestanzt und damit die **Zugfestigkeit** und die **Bruchdehnung** gemäss DIN 53504 bestimmt.

Zur Bestimmung der **Shore Härte** wurden Prüfkörper mit einer Schichtdicke von 5 mm gespritzt und damit nach einer Lagerzeit von 7 Tagen im Normklima die Shore A und/oder Shore D Härte gemäss ISO 7619-1 bestimmt.

Die **Taber Abrasion** wurde bestimmt mit einem 100 mm x 100 mm Aluminiumblech beschichtet mit 2 mm der jeweiligen Polyharnstoff-Beschichtung nach einer Lagerzeit von 7 Tagen im Normklima, mit einem Taber 5151 Abrasionsgerät, CS10 Abrasionsrädern bei 1 kg Gewichtsbeladung, wobei der Gewichtsverlust der Beschichtung nach 500 Zyklen bestimmt wurde.

Die **Beständigkeit gegen Chlorwasser** wurde bestimmt durch Lagerung beschichteter Betonplatten im Format 300 x 300 x 80 mm. Die Platten waren an den Schmalseiten mittels einer Epoxy-Spachtelmasse (SikaCor^{®}-146 DW, von Sika) versiegelt. Die Fläche (300 x 300 mm) wurde mit einem Epoxyprimer (Sikafloor^{®} 151, von Sika) vorbehandelt und mit Quarzsand abgestreut. Darauf wurde die jeweilige Polyharnstoff-Beschichtung in einer Schichtdicke von 2 mm wie beschrieben appliziert und während 7 Tagen im Normklima gelagert. Die so beschichteten Betonplatten wurden schmalseitig in ein Wasserbecken mit einem Chlorgehalt von 1g/l (Elektrochlorung) eingelagert. Nach 3 Monaten wurde der Zustand der Polyharnstoff-Beschichtung beurteilt. Als "sehr gut" wurde die Beständigkeit bewertet, wenn die Haftung und die Härte der Beschichtung keine Auffälligkeiten zeigten. Eine allfällige optische Veränderung ist in der Tabelle 6 angegeben.

Die **Haftzugfestigkeit** wurde bestimmt an einer während 7 Tagen im Normklima gelagerten Betonplatte 300 x 300 x 80 mm, auf welche die jeweilige Polyharnstoff-Beschichtung in einer Schichtdicke von 2 mm appliziert war. Mit einem Diamantkernbohrer mit Durchmesser 50 mm wurde durch die Beschichtung ca. 10 mm tief ins Betonsubstrat gebohrt. Auf die Fläche innerhalb der Bohrung wurde ein Stahlzylinder mit Durchmesser 50 mm auf die Beschichtung geklebt. Anschliessend wurde der Stahlzylinder in Anlehnung an DIN EN 4624 mit einer Geschwindigkeit von 0.05 N/mm² bis zum Bruch senkrecht zur Oberfläche des Bodenschutzsystems gezogen.

Die Resultate sind in der Tabelle 6 angegeben.

**Tabelle 4: Zusammensetzung und Eigenschaften von K1-1 bis K1-4.**

| **Komponente** | **K1-1** | **K1-2** | **K1-3** | **K1-4** |
|---|---|---|---|---|
| Diamin-**1** | 42.0 | 42.0 | 42.0 | 42.8 |
| Polyetheramin-**1** | - | - | 4.4 | 4.4 |
| Polyetheramin-**2** | - | - | | 30.0 |
| Aldimin-**1** | 12.0 | 10.0 | 10.0 | 10.0 |
| ATH | 26.9 | 30.0 | 25.9 | - |
| Farbpaste | 10.0 | 10.0 | 10.0 | 10.0 |
| PTFE Pulver | 5.0 | 4.4 | 4.0 | - |
| UV Stabilisatoren | 1.0 | 1.0 | 1.0 | 1.0 |
| Additive ¹ | 1.9 | 1.4 | 1.5 | 0.6 |
| Epoxysilan | 1.0 | 1.0 | 1.0 | 1.0 |
| Dibutylzinndiacetat | 0.2 | 0.2 | 0.2 | 0.2 |
| Verhältnis **V1** ² | 64/36 | 68/32 | 73/27 | 76/24 |
| Viskosität (23°C) | 0.98 Pa.s | 0.78 Pa.s | 0.66 Pa.s | 0.18 Pa.s |
| Dichte [g/ml] | 1.20 | 1.25 | 1.14 | 0.97 |

| | | | | |
|---|---|---|---|---|
| ¹ Netzmittel, Rheologie-Additive, Entschäumer ² Verhältnis der Anzahl freie Amingruppen zur Anzahl blockierte Amingruppen | | | | |

**Tabelle 5: Zusammensetzung und Eigenschaften von K2-1 und K2-2.**

| **Komponente** | **K2-1** | **K2-2** |
|---|---|---|
| Polyisocyanat-**2** | 24.3 | 24.3 |
| Polyisocyanat-**3** | 65.7 | 65.7 |
| Acrylat-**1** | 10.0 | - |
| Acrylat-**2** | - | 10.0 |
| Viskosität (23°C) [Pa.s] | 0.97 | 0.86 |
| Dichte [g/ml] | 1.04 | 1.08 |
| NCO-Gehalt [Gew.%] | 15.4 | 15.4 |

**Tabelle 6: Zusammensetzung und Eigenschaften von B15 bis B18.**

| **Beispiel** | **B15** | **B16** | **B17** | **B18** |
|---|---|---|---|---|
| Komponente | **K1-1** | **K1-2** | **K1-3** | **K1-4** |
| Komponente | **K2-1** | **K2-2** | **K2-2** | **K2-2** |
| Mischungsverhältnis (Volumen) | 1:1 | 1:1 | 1:1 | 1:1 |
| Gelierzeit (von Hand) | 5 s | 4.5 s | 4 s | 3.5 s |
| Zeit bis Begehbarkeit | 30 min | 20 min | 15 min | 10 min |
| Verarbeitbarkeit | sehr gut | sehr gut | sehr gut | sehr gut |
| Aspekt | sehr schön | sehr schön | sehr schön | sehr schön |
| Zugfestigkeit [MPa] | 9.1 | 10.0 | 11.9 | 7.9 |
| Bruchdehnung [%] | 80 | 60 | 70 | 90 |
| Shore Härte | | 86 A | 92 A | 81 A |
| | 36 D | 37 D | 41 D | 30 D |
| Taber Abrasion [mg] | 322 | 680 | 629 | 276 |
| Beständigkeit gegen Chlorwasser (3 Mt) | n.b. | n.b. | sehr gut ¹ | sehr gut ¹ |
| Haftzugfestigkeit | n.b. | n.b. | > 3 MPa Betonbruch | > 3 MPa Betonbruch |

| | | | | |
|---|---|---|---|---|
| ¹ leichtes Ausbleichen, leichter Glanzverlust "n.b." steht für "nicht bestimmt" | | | | |

## Patentansprüche

1. Verwendung eines Härters für die Aushärtung von mindestens einem Polyisocyanat, wobei der Härter mindestens ein Dimerfettsäure basiertes Amin **A1** und gegebenenfalls mindestens ein weiteres Amin **A2** mit jeweils freien und/oder blockierten Amingruppen enthält,
wobei der Härter freie Amingruppen und blockierte Amingruppen im Molverhältnis 40/60 bis 90/10 enthält.

2. Verwendung gemäss Anspruch 1, **dadurch gekennzeichnet, dass** der Gehalt an Dimerfettsäure basiertem Amin **A1** bezogen auf den gesamten Härter mindestens 30 Gewichts-%, bevorzugt mindestens 35 Gewichts-%, beträgt.

3. Verwendung gemäss einem der Ansprüche 1 oder 2, **dadurch gekennzeichnet, dass** die freien Amingruppen primäre Amingruppen sind.

4. Verwendung gemäss einem der Ansprüche 1 bis 3, **dadurch gekennzeichnet, dass** die blockierten Amingruppen ausgewählt sind aus der Liste bestehend aus Aldimingruppen, Ketimingruppen und Oxazolidingruppen, bevorzugt Aldimingruppen und Ketimingruppen, insbesondere Aldimingruppen.

5. Verwendung gemäss einem der Ansprüche 1 bis 4, **dadurch gekennzeichnet, dass** das Dimerfettsäure basierte Amin **A1** und das gegebenenfalls vorhandene Amin **A2** jeweils mindestens zwei Amingruppen enthalten.

6. Verwendung gemäss einem der Ansprüche 1 bis 5, **dadurch gekennzeichnet, dass** das Dimerfettsäure basierte Amin **A1** ein Amin-Equivalentgewicht von 200 bis 400 g/eq, bevorzugt 250 bis 300 g/eq, aufweist.

7. Verwendung gemäss einem der Ansprüche 1 bis 6, **dadurch gekennzeichnet, dass** der Härter mindestens ein weiteres Amin **A2** enthält, wobei das weitere Amin **A2** kein Dimerfettsäure-basiertes Amin ist und insbesondere ein Amin-Equivalentgewicht von 44 bis 2'000 g/eq, bevorzugt 51 bis 1'200 g/eq, insbesondere 58 bis 500 g/eq, aufweist.

8. Verwendung gemäss einem der Ansprüche 1 bis 7, **dadurch gekennzeichnet, dass** das Amin **A2** ausgewählt ist aus der Liste bestehend aus Isophorondiamin, 1,5-Pentandiamin, 1,6-Hexandiamin, 2,2(4),4-Trimethyl-1,6-hexandiamin, 1,3-Bis(aminomethyl)cyclohexan, 1,4-Bis(aminomethyl)cyclohexan, 1,2-Diaminocyclohexan, 1,3-Diaminocyclohexan, 1,4-Diaminocyclohexan, 2(4)-Methyl-1,3-diaminocyclohexan, Bis(4-aminocyclohexyl)methan, 1,3-Bis-(aminomethyl)benzol, Polyoxypropylendiaminen mit einem mittleren Molekulargewicht Mₙ im Bereich von 200 bis 4'000 g/mol, bevorzugt 200 bis 2'000 g/mol, insbesondere 200 bis 500 g/mol, und Polyoxypropylentriaminen mit einem mittleren Molekulargewicht Mₙ im Bereich von 300 bis 5'000 g/mol, insbesondere 300 bis 500 g/mol.

9. Verwendung gemäss einem der Ansprüche 1 bis 8, **dadurch gekennzeichnet, dass** der Härter ein Dimerfettsäure basiertes Amin **A1** mit freien Amingruppen und mindestens ein weiteres Amin **A2** mit blockierten Amingruppen enthält.

10. Polyharnstoff-Beschichtung umfassend
- eine Komponente **K1** umfassend den Härter gemäss einem der Ansprüche 1 bis 9, und
- eine Komponente **K2** enthaltend mindestens ein Polyisocyanat, insbesondere mindestens ein Polyisocyanat mit aliphatisch gebundenen Isocyanatgruppen.

11. Polyharnstoff-Beschichtung gemäss Anspruch 10, **dadurch gekennzeichnet, dass** die Komponente **K2** einen NCO-Gehalt bezogen auf die Summe aller Isocyanatgruppen-haltigen Bestandteile von 8.4 bis 29.0 Gew.%, insbesondere 12.0 bis 26.6 Gew.%, aufweist.

12. Polyharnstoff-Beschichtung gemäss einem der Ansprüche 10 oder 11, **dadurch gekennzeichnet, dass** mindestens ein weiterer Bestandteil ausgewählt aus der Liste bestehend aus Füllstoffen, Pigmenten, Haftvermittlern, Stabilisatoren, Entschäumern, Entlüftern und Netzmitteln enthalten ist.

13. Methode zum Beschichten, **dadurch gekennzeichnet, dass** die Komponenten **K1** und **K2** der Polyharnstoff-Beschichtung gemäss einem der Ansprüche 10 bis 12 in einer Zweikomponenten-Spritzapparatur vermischt und die vermischte Beschichtung auf mindestens ein Substrat appliziert wird.

14. Ausgehärtete Beschichtung, erhalten aus dem Vermischen der Komponenten **K1** und **K2** der Polyharnstoff-Beschichtung gemäss einem der Ansprüche 10 bis 12 oder mittels der Methode gemäss Anspruch 13, insbesondere mittels der Methode gemäss Anspruch 13.

15. Ausgehärtete Beschichtung gemäss Anspruch 14, **dadurch gekennzeichnet, dass** die Beschichtung eine Zugfestigkeit von mindestens 5 MPa, bevorzugt mindestens 7.5 MPa, und eine Bruchdehnung von mindestens 5 %, bevorzugt mindestens 25 %, insbesondere mindestens 50 %, aufweist, bestimmt an während 7 Tagen im Normklima ausgehärteten Filmen mit einer Schichtdicke von 2 mm gemäss DIN 53504 mit Prüfkörpern vom Typ S2.
